# EUROPEAN PATENT APPLICATION

(11) **EP 2 433 738 A1**
(43) Date of publication of application: **28.03.2012**
(21) Application number: 09844944.0
(22) Date of filing: 05.06.2009
(51) Int. Cl.: B23K 11/31, B23K 11/30, B23K 11/36

(54) **SPOT WELDER ELECTRODE PART**

(30) Priority: 21.05.2009 JP 2009122621
(71) Applicant: Shinkokiki Co., Ltd., Nagoya-shi Aichi 452-0822 (JP); P&c Company Limited, Mie 511-0834 (JP)
(72) Inventor: ASAI Naoki, Nagoya-shi Aichi 452-0822 (JP); FUKIZAWA Takeo, Nagoya-shi Aichi 452-0822 (JP)
(74) Representative: Paget, Hugh Charles Edward
(86) International application number: PCT/JP2009/060355
(87) International publication number: WO 2010/134213

(57) **Abstract**

The present invention provides an electrode unit of a spot welding machine that can prevent an electrode holder and a mini chip from overheat.

A recessed fitting portion 10b having a circular shape in section is formed in a surface of a projecting portion 10a of an electrode holder 10. A first O ring groove 10c is formed in an inner peripheral surface of the recessed fitting portion 10b. A cooling water passage 10g continuous to the recessed fitting portion 10b is formed in the electrode holder 10. A columnar fitting portion 20b is formed in a base end of the abutting portion 20a of the electrode 20. A second O ring groove 20c is formed in an outer peripheral surface of the fitting portion 20b. The fitting portion 20b is inserted in the recessed fitting portion 10b. An O ring 30 is fitted in the first O ring groove 10c and the second O ring groove 20c. Then the electrode 20 is attached to the projecting portion 10a. A cooling water circulated in the cooling water passage 10g cools down the electrode 20 and the projecting portion 10a.

## Description

### [TECHNICAL FIELD]

The present invention relates to a structure of an electrode unit provided in a spot welding machine.

### [BACKGROUND ART]

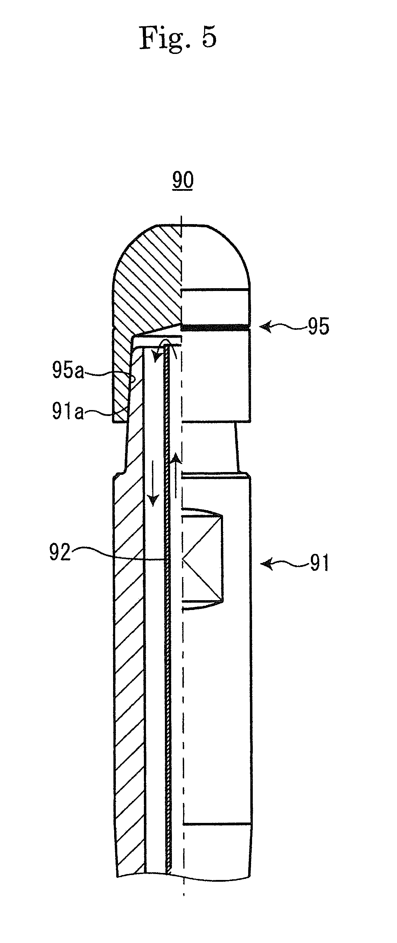

The spot welding is a conventional welding technique extensively employed to weld metal members, an example of which is disclosed in the Patent Document 1. Describing the spot welding, electric current is applied to the metal members while they are being pressed to be bonded to each other so that the metal members are melted to be welded by resulting electric resistance heat. As illustrated in Fig. 5, a spot welding machine used to perform the spot welding has an electrode unit 90 including a pair of cylindrical shanks 91 that can be attached to and detached from each other, and a pair of cap chips 95 respectively attached to edges of the pair of shanks 91. When the spot welding machine is used to perform the spot welding, electric current is applied to the metal members while they are being pressed to be bonded to each other by such pair of cap chips 95. A fitting portion 91a taperedly reduced in diameter is formed in each of the edges of the shanks 90. A recessed fitting portion 95a taperedly reduced in diameter toward the far end is formed in each of the cap chips 95. The fitting portions 91a are fitted in the recessed fitting portions 95a so that the cap chips 95 are securely attached to the shanks 91. A water filling pipe 92 closely facing a bottom part of the recessed fitting portion 95a is provided inside the shanks 91. When cooling water is fed in the water feed pipe 92, the cap chip 95 is cooled down. Thus, the cap chip 95 can be protected from overheat.

In recent years, high-tensile steel is increasingly often used as a material of automobiles for weight reduction and better safety. To perform the spot welding to members made of high-tensile steel which is very resistant to deformation, it is necessary to apply a high pressure to press the members to be bonded to each other. Such a high pressure makes the tapered fitting portion 91a widen the recessed fitting portion 95a as the spot welding advances. Another problem is that a reaction generated when the edge of the fitting portion 91a abuts the bottom part of the recessed fitting portion 95a often makes the cap chip 95 drop from the fitting portion 91a of the shank 91. To put the cap chip 95 that dropped back to the fitting portion 91a, the cap chip 95 is let through the bore of a dies to be narrowed in diameter so that the widened recessed fitting portion 95a is back to its original shape. This is a very time-consuming work.

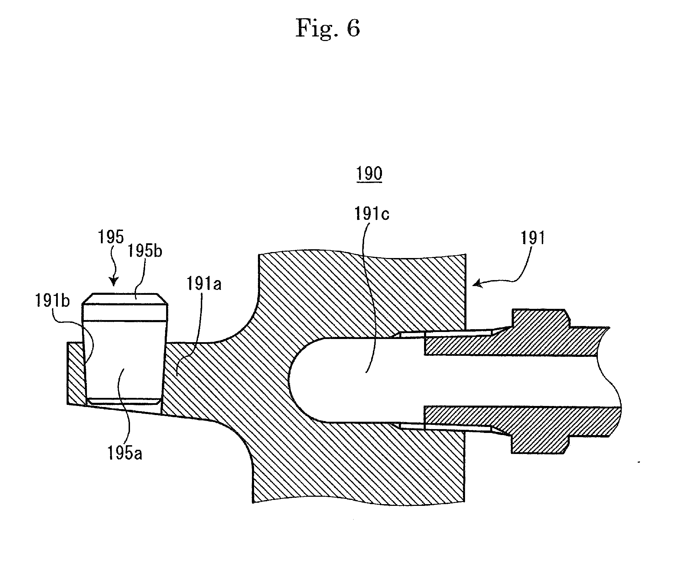

In the event of any interference of the shank or cap chip with members to be welded or a tool because of a very small welding part, the spot welding is performed by an electrode unit 190 having a substantially columnar mini chip 195 attached to a surface of a plate-shape projecting portion 191a formed in an electrode holder 191 as illustrated in Fig. 6. A tapered fitting hole 191b having an inner diameter gradually reduced toward the far end is formed in the projection portion 191a. A tapered fitting portion 195a fittable to the fitting hole 191b is formed in a base part of the mini chip 195. The fitting portion 195a is fitted in the fitting hole 191b so that the mini chip 195 is attached to the projecting portion 191a. An edge of the mini chip 195, which is an abutting portion 195b to contact the members to be welded, protrudes from the surface of the projecting portion 191a. A welding current supplied to the electrode holder 191 is supplied to the mini chip 195 through contact surfaces of the fitting hole 191b and the fitting portion 195a.

In the electrode unit 190 of the spot welding machine structured as illustrated in Fig. 6, the fitting portion 195a widens the fitting hole 191b gradually as the spot welding advances, inviting the mini chip 195 into the fitting hole 191b. To ensure an enough contact area between the fitting portion 195a and the fitting hole 191b and maintain a good fitting state between the fitting portion 195a and the fitting hole 191b so that the mini chip 195 is prevented from falling off, it is necessary to form the fitting portion 195a at another position exposed from the fitting hole 191b as illustrated in Fig. 6. As a result, the mini chip 195 overly protrudes from the projecting portion 191a. It is not allowed to increase thickness dimensions of the mini chip 195 and the projecting portion 191a in total because of the need to avoid any interference, meaning that the projecting portion 191a cannot be increased in thickness. Therefore, it is not possible to form a cooling water passage in the projecting portion 191a.

As illustrated in Fig. 6, in the electrode holder 191, a cooling water passage 191c is formed only to extend to a position near the base part of the projecting portion 191a. Therefore, the projecting portion 191a thus lacking the cooling water passage 191c is not cooled down enough. As a result, the projecting portion 191a is softened and deflected by heat during the welding, resulting in a poor welding accuracy. There are other problems. The heat further oxidizes the fitting portion 195a and the fitting hole 191b, resulting in a poor electrical conduction between the electrode holder 191 and the mini chip 195. This leads to a poor welding result. Because of the projecting portion 191a not cooled down enough, heat is not conducted well from the mini chip 195 to the projecting portion 191a. As a result, the mini chip 195 thereby overheated is easily softened and deformed, therefore, had to be replaced frequently to attain a good welding quality.

[PATENT DOCUMENT 1] Japanese Unexamined Patent Application Publication No. 2001-87864

### [SUMMARY OF THE INVENTION]

### [PROBLEM TO BE SOLVED BY THE INVENTION]

To solve the conventional technical problems, the present invention provides an electrode unit of a spot welding machine structurally advantageous in that an electrode can be prevented from falling off from an electrode holder and protected from overheat.

### [MEANS FOR SOLVING THE PROBLEM]

In order to solve the conventional technical problems, the invention recited in Claim 1 provides an electrode unit of a spot welding machine, comprising:
an electrode holder provided with a projecting portion formed in a plate shape and having a welding current fed thereto; and
an electrode attached to a surface of the projecting portion so as to protrude therefrom to press members to be welded using an abutting portion formed in an edge thereof, wherein:
   a recessed fitting portion having a circular shape in section is formed in the projecting portion;
   a first O ring groove is formed in an inner peripheral surface of the recessed fitting portion;
   a cooling water passage continuous to the recessed fitting portion where a cooling water is supplied is formed in the electrode holder;
   a planar power-feed face is formed around an opening of the recessed fitting portion;
   a columnar fitting portion is formed in a base end of the abutting portion of the electrode;
   a second O ring groove is formed in an outer peripheral surface of the fitting portion;
   a planar power-to-be-fed face is formed around the fitting portion in the base end of the abutting portion;
   the fitting portion is inserted in the recessed fitting portion, an O ring is fitted in the first and second O ring grooves, and the power-feed face and the power-to-be-fed face are brought into contact with each other, to attach the electrode to the projecting portion.

The invention recited in Claim 2 is **characterized in that** an end face of the fitting portion of the electrode and a bottom part of the recessed fitting portion are situated away from each other in the invention recited in Claim 1.

The invention recited in Claim 3 is **characterized in that** a water feed pipe into which the cooling water is fed is provided in the water cooling passage, and an opening of the water feed pipe closely faces the fitting portion of the electrode in the invention recited in Claim 1.

The invention recited in Claim 4 provides an electrode unit of a spot welding machine, comprising:
a cylindrical electrode holder provided with a cooling water passage therein and having a welding current supplied thereto; and
an electrode attached to an edge of the electrode holder to press members to be welded using an abutting portion formed in an edge thereof, wherein:
   a recessed fitting portion having a circular shape in section and continuous to the cooling water passage is formed in the edge of the electrode holder;
   a first O ring groove is formed in an inner peripheral surface of the recessed fitting portion;
   a planar power-feed face is formed around an opening of the recessed fitting portion in the edge of the electrode holder;
   a columnar fitting portion is formed in a base end of the abutting portion of the electrode;
   a second O ring groove is formed in an outer peripheral surface of the fitting portion;
   a planar power-to-be-fed face is formed around the fitting portion in the base end of the abutting portion;
   the fitting portion is inserted in the recessed fitting portion;
   an O ring is fitted in the first and second O ring grooves, the power-feed face and the power-to-be-fed face are brought into contact with each other to attach the electrode to the electrode holder;
   a water feed pipe into which the cooling water is fed is provided in the cooling water passage, and an opening of the water feed pipe closely faces the fitting portion of the electrode.

### [EFFECT OF THE INVENTION]

The invention recited in Claim 1 provides an electrode unit of a spot welding machine, comprising an electrode holder provided with a projecting portion formed in a plate shape and having a welding current supplied thereto; and an electrode attached to a surface of the projecting portion so as to protrude therefrom to press members to be welded using an abutting portion formed in an edge thereof, wherein: a recessed fitting portion having a circular shape in section is formed in the projecting portion; a first O ring groove is formed in an inner peripheral surface of the recessed fitting portion; a cooling water passage continuous to the recessed fitting portion where a cooling water is fed is formed in the electrode holder; a planar power-feed face is formed around an opening of the recessed fitting portion; a columnar fitting portion is formed in a base end of the abutting portion of the electrode; a second O ring groove is formed in an outer peripheral surface of the fitting portion; a planar power-to-be-fed face is formed around the fitting portion in the base end of the abutting portion; the fitting portion is inserted in the recessed fitting portion; an O ring is fitted in the first and second O ring grooves; the power-feed face and the power-to-be-fed face are brought into contact with each other; and the electrode is attached to the projecting portion.
Accordingly, the electrode and the projecting portion of the electrode holder are cooled down by the cooling water supplied through the cooling water passage so that the electrode and the electrode holder can be protected from overheat.

The invention recited in Claim 2 is **characterized in that** an end face of the fitting portion of the electrode and a bottom part of the recessed fitting portion are situated away from each other in the invention recited in Claim 1.
Accordingly, the cooling water can reach and contact the end face of the fitting portion of the electrode as well, effectively cooling down the electrode.

The invention recited in Claim 3 is **characterized in that** a water feed pipe into which the cooling water is fed is provided in the water cooling passage, and an opening of the water feed pipe closely faces the fitting portion of the electrode in the invention recited in Claim 1.
Accordingly, the cooling water supplied from the edge of the water feed pipe directly contacts the fitting portion of the electrode, effectively cooling down the mini chip.

The invention recited in Claim 4 provides an electrode unit of a spot welding machine, comprising: a cylindrical electrode holder provided with a cooling water passage therein and having a welding current supplied thereto; and an electrode attached to an edge of the electrode holder to press members to be welded using an abutting portion formed in an edge thereof, wherein: a recessed fitting portion having a circular shape in section and continuous to the cooling water passage is formed in the edge of the electrode holder; a first O ring groove is formed in an inner peripheral surface of the recessed fitting portion; a planar power-feed face is formed around an opening of the recessed fitting portion in the edge of the electrode holder; a columnar fitting portion is formed in a base end of the abutting portion of the electrode; a second O ring groove is formed in an outer peripheral surface of the fitting portion; a planar power-to-be-fed face is formed around the fitting portion in the base end of the abutting portion; the fitting portion is inserted in the recessed fitting portion, an O ring is fitted in the first and second O ring grooves, the power-feed face and the power-to-be-fed face are brought into contact with each other, to attach the electrode to the electrode holder; a water feed pipe into which the cooling water is fed is provided in the cooling water passage, and an opening of the water feed pipe closely faces the fitting portion of the electrode.
Accordingly, the power-to-be-fed face abuts the power-feed face during the welding, and a pressing force thereby exerted on the electrode is supported by the power-feed face. This avoids the conventional problem that the recessed fitting portions of the paired cap chips pressing the members to be welded are widened, which possibly causes the cap chips to fall off from the shanks. Further, the O ring is fitted in the first and second O ring grooves when the electrode is attached to the electrode holder. This prevents the electrode from falling off from the electrode holder.
Further, the electrode and the projecting portion of the electrode holder are cooled down by the cooling water supplied through the cooling water passage so that the electrode and the electrode holder can be protected from overheat.

### [BRIEF DESCRIPTION OF THE DRAWINGS]

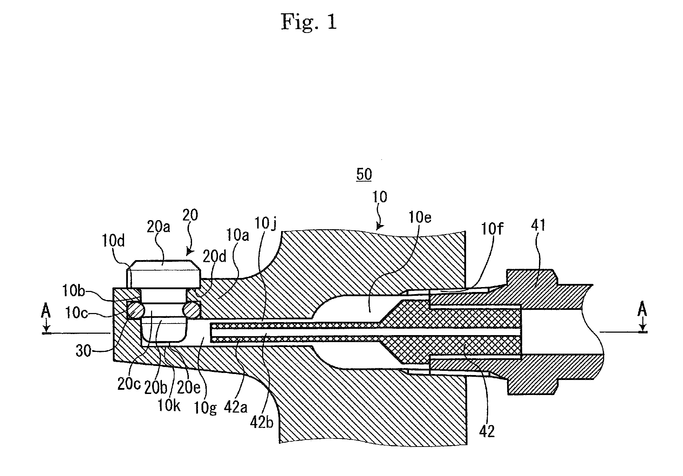

Fig. 1 is a sectional view of an electrode unit provided in a spot welding machine according to a first embodiment of the present invention.
Fig .2 is a sectional view cut along A-A in Fig. 1.
Fig. 3 is a descriptive drawing of the electrode unit provided in the spot welding machine in use.

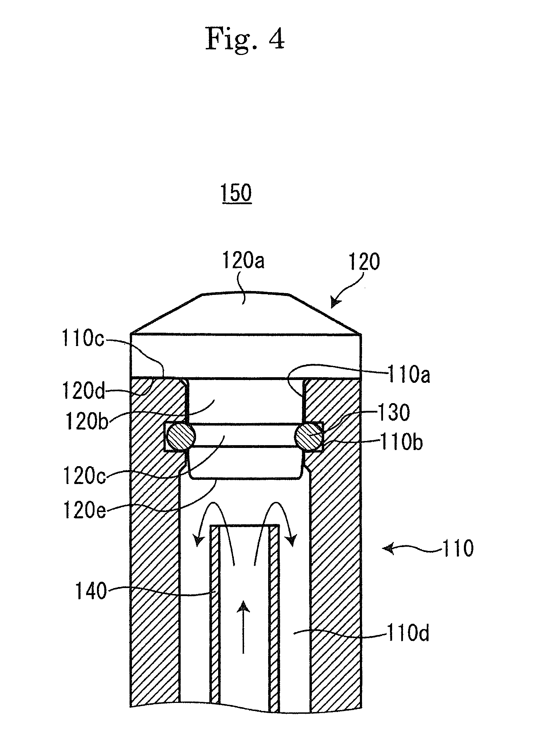

Fig. 4 is a sectional view of an electrode unit provided in a spot welding machine according to a second embodiment of the present invention.
Fig. 5 is a descriptive drawing of an electrode unit provided in a conventional spot welding machine.
Fig. 6 is a descriptive drawing of an electrode holder and a mini chip conventionally used.

### [BEST MODE FOR CARRYING OUT THE INVENTION]

### (First Embodiment)

Hereinafter, preferable embodiments of the present invention are described referring to the accompanied drawings. An electrode holder 10 is attached to a power feed unit of a spot welding machine so that the electrode holder 10 is supplied with a welding current from the power feed unit. The electrode holder 10 is made of an copper alloy such as copper-chromium alloy or beryllium copper having a remarkable strength and a good electrical conductivity. The electrode holder 10 is provided with a plate-shape projecting portion 10a formed so as to protrude therefrom. A recessed fitting portion 10b is formed in a surface of the projecting portion 10a. The recessed fitting portion 10b has a circular shape in section. The recessed fitting portion 10b is formed orthogonal to the surface of the projecting portion 10a with no tilt toward either side of the projecting portion 10a. A first O ring groove 10c is formed in an inner peripheral surface of the recessed fitting portion 10b along an entire circumference thereof. A planar power-feed face 10d is formed on the surface of the projecting portion 10a around an opening of the recessed fitting portion 10b.

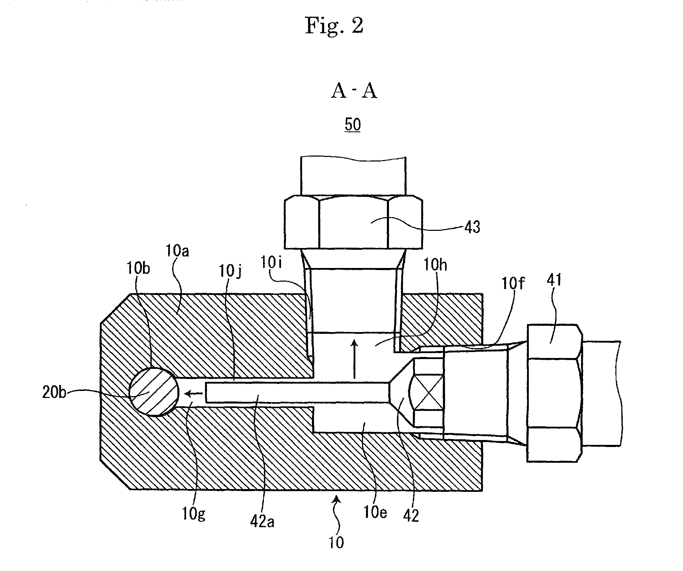

An open hole 10e is formed from a side surface of the electrode holder 10 to a base part of the projecting portion 10a. A threaded groove is formed in an opening 10f of the open hole 10e so that a cylindrical inflow port member 41 is threaded into the opening 10f. A cooling water pipe from which a cooling water is fed is connected to the inflow port member 41. A cooling water passage 10g continuous to the recessed fitting portion 10b is formed from an edge of the open hole 10e. A water feed member 42 is attached to an edge of the inflow port member 41. A water feed pipe 42a is formed in an edge of the water feed member 42. A flow path 42b where the cooling water is circulated is formed. The flow path 42b is continuous from a base end of the water feed member 42 to an edge of the water feed pipe 42a. The water feed pipe 42a is inserted in the cooling water passage 10g, and an edge of the water feed pipe 42a closely faces the recessed fitting portion 10b. The water feed pipe 42a has an outer diameter smaller than the inner diameter of the cooling water passage 10g. As illustrated in Fig. 2, a discharge channel 10h having an opening in a side surface of the electrode holder 10 is formed continuous from the edge of the open hole 10e. A threaded groove is formed in an opening 10i of the discharge channel 10h so that a cylindrical discharge port member 43 is threaded into the threaded groove. A discharge pipe is connected to the discharge port member 43.

An electrode 20 includes an abutting portion 20a and a fitting portion 20b which are integrally formed. The abutting portion 20a abuts members to be welded, and the fitting portion 20b is formed in a base end of the abutting portion 20a. The electrode 20 is made of an copper alloy such as copper-chromium alloy or beryllium copper having a remarkable strength and a good electrical conductivity. The fitting portion 20b has a columnar shape. The fitting portion 20b has an outer diameter slightly smaller than the inner diameter of the recessed fitting portion 10b. A second O ring groove 20c is formed in an outer peripheral surface of the fitting portion 20b along an entire circumference thereof. The abutting portion 20a has a width dimension larger than that of the fitting portion 20b. A planar power-to-be-fed face 20d is formed in the base end of the abutting portion 20a around the fitting portion 20b.

An O ring 30 is fitted in the first O ring groove 10c. The materials used to form the O ring 30 include nitrile rubber, hydrogenated nitrile rubber, fluororubber, silicon rubber, and urethane rubber. The fitting portion 20b of the electrode 20 is inserted in the recessed fitting portion 10b, and the O ring 30 is fitted in a second O ring groove 20c, so that the electrode 20 is attached to the projecting portion 10a of the electrode holder 10. In such a state, the power-to-be-fed face 20d is in contact with the power-feed face 10d.

The cooling water supplied from the inflow port member 41 is circulated in the flow path 42b of the water feed member 42, and then supplied from the edge of the water feed pipe 42a to the cooling water passage 10g and the recessed fitting portion 10b to cool down the fitting portion 20b of the electrode 20. The opening of the water feed pipe 42a is closely facing the fitting portion 20b of the electrode 20. Therefore, the cooling water supplied from the edge of the water feed pipe 42a directly contacts the fitting portion 20b to effectively cool down the fitting portion 20b. Further, for effective cooling down of the fitting portion 20b, an end face 20e of the fitting portion 20b and a bottom part 10k of the recessed fitting portion 10b are situated away from each other so that the cooling water contacts the end face 20b of the fitting portion 20b. According to the present invention, the O ring 30 provided between the recessed fitting portion 10b and the fitting portion 20b eliminates the possibility that the cooling water supplied from the water feed pipe 42a of the water feed member 42 leaks from between the recessed fitting portion 10b and the fitting portion 20b. The cooling water used to cool down the fitting portion 20b of the electrode 20 is circulated in a flow path 10j between the inner side of the cooling water passage 10f and the outer side of the water feed pipe 42a, circulated through the open hole 10e and the discharge channel 10h, and then finally discharged into a discharge pipe from the discharge port member 43.

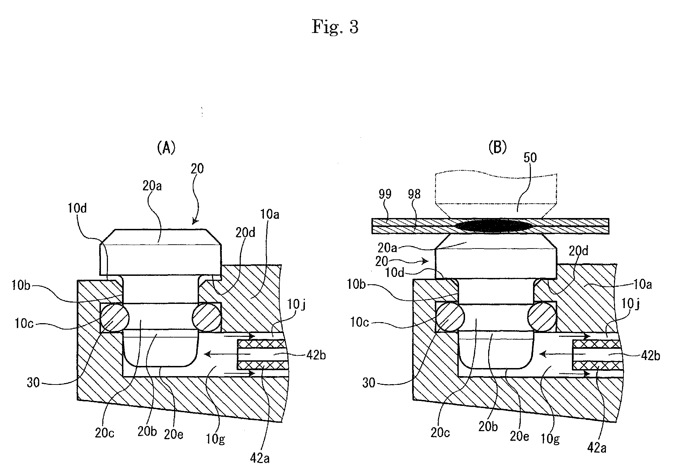

In the case where the flow path 10j formed between the inner side of the cooling water passage 10g and the outer side of the water feed pipe 42a fails to have a sectional area adequately large for a flow rate of the cooling water circulated in the flow path 42b of the water feed member 42, a water pressure in the recessed fitting portion 10b thereby increased pushes the electrode 20 upward, making the power-to-be-fed face 20d lose the contact with the power-feed face 10d as illustrated in Fig. 3(A). The present invention, the second O ring groove 20c in which the O ring 30 is fitted is formed in the outer peripheral surface of the fitting portion 20b of the electrode 20. In the presence of the O ring 30, the electrode 20, even if pushed upward by the water pressure, does not fall off from the recessed fitting portion 10b. Besides that, the first O ring groove 10c is formed in the inner peripheral surface of the recessed fitting portion 10b to ensure that the O ring 30 does not fall off from the recessed fitting portion 10b.

When members to be welded 98 and 99 are pressed to be bonded to each other by means of the electrode 20 and an electrode 50 facing the electrode 20 as illustrated in Fig. 3(B), the power-to-be-fed face 20d contacts the power-feed face 10d. Then, the welding current is flown to between the electrode 20 and the electrode 50. As a result of the electrical conduction therebetween, the members to be welded 98 and 99 are melted by resulting electric resistance heat and finally welded to each other. The power-to-be-fed face 20d and the power-feed face 10d are both planar faces. This ensures the electrical conduction between the power-to-be-fed face 20d and the power-feed face 10d during the welding. The electrical resistance heat generated in the members to be welded 98 and 99 is transmitted to the abutting portion 20a of the electrode 20 during welding. When the welding is successfully completed, however, the water pressure in the recessed fitting portion 10b pushes the electrode 20 upward, and the power-to-be-fed face 20d is drawn away from the power-feed face 10d as illustrated in Fig. 3(A), so that heat is hardly transmitted from the electrode 20 toward the projecting portion 10a of the electrode holder 10. Further, the cooling water circulated in the cooling water passage 10g cools down the projecting portion 10a so that the projecting portion 10a is not softened or deformed by heat.

When the welding is not performed, there is no contact between the power-to-be-fed face 20d and the power-feed face 10d, letting the power-to-be-fed face 20d exposed to air to be cooled down. During the welding, the power-to-be-fed face 20d and the power-feed face 10d are brought into contact with each other, and the air which took the heat away from the power-to-be-fed face 20d is discharged from between the power-to-be-fed face 20d and the power-feed face 10d. Since the power-feed face 10d is cooled down by the air as well, neither of the power-to-be-fed face 20d nor the power-feed face 10d is oxidized. This further ensures the electrical conduction between the power-to-be-fed face 20d and the power-feed face 10d. Though the power-to-be-fed face 20d is away from the power-feed face 10d, hardly enabling the heat transmission from the electrode 20 toward the projecting portion 10a of the electrode holder 10, the fitting portion 20b of the electrode 20 is constantly cooled down by the cooling water supplied from the water feed pipe 42a. This avoids softening the electrode 20 due to overheat. Therefore, the abutting portion 20a of the electrode 20 is less likely to be deformed by the welding. As a result, the replacement interval of the electrode 20 can be extended to three times longer than the prior art.

The present invention defines the flow rate of the cooling water circulated in the flow path 42b of the water feed member 42 and the sectional area of the flow path 10j formed between the inner side of the cooling water passage 10g and the outer side of the water feed pipe 42a so that the water pressure in the recessed fitting portion 10b effectively serves to draw the power-to-be-fed face 20d away from the power-feed face 10d.

The present invention is **characterized in that** the power-to-be-fed face 20d of the electrode 20 is brought into contact with the power-feed face 10d of the projecting portion 10d so that the electrode holder 10 and the electrode 20 are electrically conducted therebetween. Therefore, it is neither necessary to form a tapered fitting hole 90b in a projecting portion 90a of an electrode holder 90 nor form a tapered fitting portion 95a in a chip 95 as so far conventionally done. Accordingly, the mini chip 95 is prevented from overly protruding from the fitting hole 90b. As a result of this, a measure of protrusion of the abutting portion 20a from the projecting portion 10a can be reduced, but the projecting portion 10a can be increased in thickness instead. Now that the projecting proportion 10a is thus increased in thickness, the cooling water passage 10g can be formed in the projecting proportion 10a to cool down the electrode 20. The projecting portion 10a larger in thickness is more rigid and more difficult to be deformed during the welding, which leads to maintain a better welding quality.

### (Second Embodiment)

Hereinafter are described differences of an electrode unit provided in a pot welding machine according to a second embodiment of the present invention as compared to the first embodiment. An electrode holder 110 according to the second embodiment has a cylindrical shape. Such an electrode holder 110 is conventionally called a shank. A cooling water passage 110d is formed inside the electrode holder 110. A recessed fitting portion 110a continuous to the cooling water passage 110d is formed in an edge of the electrode holder 110. The recessed fitting portion 110a has a circular shape in section. The recessed fitting portion 110a has no tilt relative to the longitudinal direction of the electrode holder 110. A first O ring groove 110b is formed in an inner peripheral surface of the recessed fitting portion 110a along an entire circumference thereof. A planar power-feed face 110c is formed in the edge of the electrode holder 110 around an opening of the recessed fitting portion 110a. The power-feed face 110c is orthogonal to the inner peripheral surface of the recessed fitting portion 110a.

An electrode 120 according to the second embodiment is structurally similar to the electrode 20 according to the first embodiment. An O ring 130 is fitted in the first O ring groove 110b. The fitting portion 120b of the electrode 120 is inserted in the recessed fitting portion 110a, and the O ring 130 is fitted in a second O ring groove 120c, so that the electrode 120 is attached to the electrode holder 110. In this state, a power-to-be-fed face 120d is in contact with the power-feed face 110c. A water feed pipe 140 which supplies a cooling water is provided in the cooling water passage 110d of the electrode holder 110. An opening of the water feed pipe 140 is closely facing an end face 120e of the fitting portion of the electrode 120.

Similarly to the first embodiment, the second embodiment is **characterized in that** the cooling water supplied from the water feed pipe 140 increases a water pressure in the recessed fitting portion 110a, making the power-to-be-fed face 120d lose the contact with the power-feed face 110c. An effect exerted by such a characteristic is similar to that of the first embodiment.

During the welding, the power-to-be-fed face 120d abuts the power-feed face 110c, and a pressure loading thereby applied to the electrode 120 is supported by the power-feed face 110c. This eliminates the conventional problem of widening the recessed fitting portion of the cap chip when the members to be welded are pressed to be bonded to each other by the paired cap chips, causing the cap chip to fall off from the shank. The O ring 130 is fitted in the first O ring groove 110b and the second O ring groove 120c when the electrode 120 is attached to the electrode holder 110. As a result, the electrode 20 does not fall off from the electrode holder 110.

Thus far, the present invention was described based on what is at present considered to be the best and most effective embodiments of the invention. However, the present invention is not necessarily limited to the embodiments described in the description of the present application. The present invention can be suitably modified unless such modifications go beyond the scope and the idea of the invention that can be read from the claims and the description. It is intended to cover in the technical scope such modifications of the electrode unit of the spot welding machine.

### [DESCRIPTION OF THE REFERENCE NUMERALS]

- 10: electrode holder
- 10a: projecting portion
- 10b: recessed fitting portion
- 10c: first O ring groove
- 10d: power-feed face
- 10e: open hole
- 10f: opening of open hole
- 10g: cooling water passage
- 10h: discharge channel
- 10i: opening of discharge channel
- 10j: flow path
- 10k: bottom part of recessed fitting portion
- 20: electrode
- 20a: abutting portion
- 20b: fitting portion
- 20c: second O ring groove
- 20d: power-to-be-fed face
- 20e: end face of fitting portion
- 41: inflow port member
- 42: water feed member
- 42a: water feed pipe
- 42b: flow path
- 43: discharge port member
- 50: electrode unit
- 90: electrode unit of conventional spot welding machine
- 91: shank
- 91a: fitting portion
- 92: water feed pipe
- 95: cap chip
- 95a: recessed fitting portion
- 110: electrode holder
- 110a: recessed fitting portion
- 110b: first O ring groove
- 110c: power-feed face
- 110d: cooling water passage
- 120: electrode
- 120a: abutting portion
- 120b: fitting portion
- 120c: second O ring groove
- 120d: power-to-be-fed face
- 120e: end face of fitting portion
- 140: water feed pipe
- 190: electrode unit of conventional spot welding machine
- 191: electrode holder
- 191a: projecting portion
- 191b: fitting hole
- 191c: cooling water passage
- 195: mini chip
- 195a: fitting portion
- 195b: abutting portion
- 198: member to be welded
- 199: member to be welded

## Claims

1. An electrode unit (50) of a spot welding machine, comprising:
an electrode holder (10) provided with a projecting portion (10a) formed in a plate shape and having a welding current supplied thereto; and
an electrode (20) attached to a surface of the projecting portion (10a) so as to protrude therefrom to press members to be welded using an abutting portion (20a) formed in an edge thereof, wherein:
a recessed fitting portion (10b) having a circular shape in section is formed in the projecting portion (10a);
a first O ring groove (10c) is formed in an inner peripheral surface of the recessed fitting portion (10b);
a cooling water passage (10g) continuous to the recessed fitting portion (10b) where a cooling water is fed is formed in the electrode holder (10);
a planar power-feed face (10d) is formed around an opening of the recessed fitting portion (10b);
a columnar fitting portion (20b) is formed in a base end of the abutting portion (20a) of the electrode (20);
a second O ring groove (20c) is formed in an outer peripheral surface of the fitting portion (20b);
a planar power-to-be-fed face (20d) is formed around the fitting portion (20b) in the base end of the abutting portion (20a);
the fitting portion (20b) is inserted in the recessed fitting portion (10b), an O ring (30) is fitted in the first O ring groove (10c) and the second O ring groove (20c), the power-feed face (10d) and the power-to-be-fed face (20d) are brought into contact with each other, to attach the electrode (20) is to the projecting portion (10a) .

2. The electrode unit of the spot welding machine according to in Claim 1, wherein an end face (20e) of the fitting portion (20b) of the electrode (20) and a bottom part (10k) of the recessed fitting portion are situated away from each other.

3. The electrode unit of the spot welding machine according to Claim 1, wherein a water feed pipe (42a) into which the cooling water is fed is provided in the water cooling passage (10g), and an opening of the water feed pipe (42a) closely faces the fitting portion (20b) of the electrode (20).

4. An electrode unit (150) of a spot welding machine, comprising:
a cylindrical electrode holder (110) provided with a cooling water passage (110d) therein and having a welding current supplied thereto; and
an electrode (120) attached to an edge of the electrode holder (110) to press members to be welded using an abutting portion (120a) formed in an edge thereof, wherein:
a recessed fitting portion (110a) having a circular shape in section and continuous to the cooling water passage (110d) is formed in the edge of the electrode holder (110);
a first O ring groove (110b) is formed in an inner peripheral surface of the recessed fitting portion (110a);
a planar power-feed face (110c) is formed around an opening of the recessed fitting portion (110a) in the edge of the electrode holder (110);
a columnar fitting portion (120b) is formed in a base end of the abutting portion (120a) of the electrode (120);
a second O ring groove (120c) is formed in an outer peripheral surface of the fitting portion (120b);
a planar power-to-be-fed face (120d) is formed around the fitting portion (120b) in the base end of the abutting portion (120a);
the fitting portion (120b) is inserted in the recessed fitting portion (110a), an O ring (130) is fitted in the first ring groove (110b) and the second O ring groove (120c), the power-feed face (110c) and the power-to-be-fed face (120d) are brought into contact with each other, to attach the electrode (120) to the electrode holder (110);
a water feed pipe (140) into which the cooling water is fed is provided in the cooling water passage (110d), and an opening of the water feed pipe (140) closely faces the fitting portion (120b) of the electrode (120).
